# EUROPEAN PATENT SPECIFICATION

(11) **EP 1 731 062 B1**
(45) Date of publication and mention of the grant of the patent: **06.08.2008**
(21) Application number: 06114968.8
(22) Date of filing: 05.06.2006
(51) Int. Cl.: A47J 19/02

(54) **Foodstuffs processing device**
Lebensmittelbearbeitungsvorrichtung
Dispositif pour traiter des produits alimentaires

(30) Priority: 06.06.2005 CN 200520019770
(43) Date of publication of application: 13.12.2006
(73) Proprietor: Wong, Yan Kwong, Kowloon Bay, Kln Hong Kong (CN)
(72) Inventor: Wong, Yan Kwong, Kowloon Bay, Kln Hong Kong (CN)
(74) Representative: Harrison Goddard Foote

(56) References cited:
- DE-C- 179 529
- FR-A- 961 279
- FR-A- 963 992
- FR-A- 2 057 531
- US-A- 5 970 860
- US-A1- 2002 088 352

## Description

This invention relates to a foodstuffs processing device. In particular, but not exclusively, the invention relates to a mufti-function juicer with meat grinding and juice extraction devices. Embodiments of the invention are provided with a vacuum-mounted base.

Juicers are used to extract juice from vegetables/fruits. Current juicers can be categorized into two types: manual and electric. Both of them use two methods to extract juice. One of them is to place the fruit on the juicer and press it manually. The juice that is pressed out will flow down. A filtering device is then used to separate pulp from the juice. The problem with this approach is that it only works with fruits that can be pressed to break juice out. The other approach is to smash the peeled fruit with blades to get juice. The problem with this approach is that it requires extra steps to separate juice and pulp in the final stage. It adds extra work to the process and does not provide a single juicer to extract juice from different fruits.

FR961279 discloses a foodstuffs processing device having a passageway for exhausting residue from the device. The size of the passageway can be changed by means of a screw operable to protrude into the passageway by different amounts. However, manipulation of the screw is inconvenient for a user.

Based on the above-mentioned issues, this invention provides a multi-function juicer with a vacuum base to mount the juicer body. It can easily manually grind meat or extract fruit juice. When extracting juice, it can also control the wetness of the pulp by adjusting a wetness control unit. It does not require extra steps to separate juice and pulp.

In a first aspect of the present invention there is provided a foodstuffs processing device as defined in the appended claims.

Some embodiments of the invention provide a multi-function juicer, which includes the following components:
A vacuum mounting base unit on the bottom of the multi-function juicer. This vacuum base includes:
   A vacuum disk that is on the bottom of the mounting vacuum base unit;
   A base that covers the abovementioned vacuum disk;
   A vacuum disk shelf on top of the vacuum disk;
   A vacuum disk controller inside the base;
   A controller fixing unit that is on the side of the vase to lock the vacuum base controller;
   A controller cover that is used to cover one side of the base;
   A vacuum disk control handler on the other side of the base to control the operation of the vacuum disk;
   A vacuum disk shelf connector that is next to vacuum disk shelf stand;
   A controller locking unit that is right next to the inner side of the abovementioned vacuum control handler; and
   A controller sealer that is inside the base, which, together with the vacuum base control handler, will hold the controller locking unit.

A mechanical device on one side of the upper part of multi-function juicer. This mechanical device includes:
A gearbox at the center of the mechanical device;
A rotating handler that is placed outside the gearbox; and
A big gear and a small gear inside the gearbox.

A juicer body that is placed on top of the vacuum mounting base. This body includes:
A body part that is on the top of the base.

A juice extraction device that is connected to the juicer body. This juice extraction device includes:
A juice extraction device body that is at the center of the juice extraction device;
A main screw bolt inside the device body;
A main screw bolt skirt that is placed at the end of the main screw bolt;
A small axle of the main screw bolt that is inside the main screw bolt;
A main screen board that is at the outlet of the device body;
A body nut that is attached to the abovementioned outlet of the device body;
Two sealing rings that are closely attached to the body nut;
An aux screw bolt that is inside the device body;
A small bolt of the aux screw bolt that is placed inside the aux screw bolt;
An aux screw bolt tail axle that is placed in the tail of the aux screw bolt;
A juice extraction screen board that is right on the outside of the main screen board;
A juice extraction device bottom cover that is placed on the bottom of the juice extraction device body;
A bottom cover sealer that surrounds that rim of the juice extraction device bottom cover;
A filter net that is placed on the center of the juice extraction device bottom cover;
A wetness control unit that is connected to the outlet of the device body; and
A juice extraction device nut that is tightened to the outlet of the device body.

A meat grinding unit that can be exchanged with some of the components in the juice extraction device to serve meat grinding purpose. This meat grinding unit includes:
A meat grinding screw bolt that can replace the main screw bolt to grind meat;
A meat grinding screw bolt skirt that is placed at the tail of the meat grinding screw bolt;
A meat grinding screen board that can replace the main screen board to grind meat;
A meat grinding body nut that can replace the body nut to grind meat; and
A pedal blade that can replace the juice extraction screen board to grind meat.

This invention can change the function by uninstalling some components in the juice extraction device and replacing them with meat grinding components. The user can conveniently grind meat or extract juice manually. And by rotating the vacuum disk control handler, the juicer can be mounted to the kitchen table, which is very easy. At the same time, when extracting juice, this invention can control the wetness of the pulp by adjusting the wetness control unit. There is no need to exact pulp/juice separation process. This provides a convenient way to use one juicer to extract juice from different fruits/vegetables. Thus it resolves the two abovementioned issues.

For a better understanding of the present invention, and to show how it may be carried into effect, reference shall now be made by way of example to the accompanying drawings, in which:
Figure 1 is the perspective view of the multi-function juicer invention;
Figure 2 is the dissembled view of the multi-function juicer invention;
Figure 3 is the perspective view of the controller locking unit that is shown in Figure 2;
Figure 4 is the perspective view of the vacuum disk control handler that is shown in Figure 2;
Figure 5 is the front view of the controller sealer that is shown in Figure 2;
Figure 6 is the side view of the controller sealer that is shown in Figure 5;
Figure 7 is the front view of the vacuum disk shelf connector that is shown in Figure 2;
Figure 8 is the side view of the vacuum disk shelf connector that is shown in Figure 7;
Figure 9 is the side view of the vacuum disk shelf that is shown in Figure 2;
Figure 10 is the top view of the vacuum disk shelf that is shown in Figure 9;
Figure 11 is the top view of the vacuum disk controller that is shown in Figure 2;
Figure 12 is the front view of the vacuum disk controller that is shown in Figure 11;
Figure 13 is the bottom view of the small gear that is shown in Figure 2;
Figure 14 is the bottom view of the large gear that is shown in Figure 2;
Figure 15 is the top view of the gearbox that is shown in Figure 2;
Figure 16 is the perspective view of the main screw bolt that is shown in Figure 2;
Figure 17 is the perspective view of the aux screw bolt that is shown in Figure 2;
Figure 18 is the side view of the aux screw bolt that is shown in Figure 17;
Figure 19 is the bottom view of the main screen board that is shown in Figure 2;
Figure 20 is the bottom view of the juice extraction screen board that is shown in Figure 2;
Figure 21 is the perspective view of the juice extraction body that is shown in Figure 2;
Figure 22 is the side view of the wetness control unit that is shown in Figure 2;
Figure 23 is the combined front view of the juice extraction body that is shown in Figure 21 and the wetness control unit that is shown in Figure 22 after they are installed together and placed in status 1;
Figure 24 is the combined front view of the juice extraction body that is shown in Figure 21 and the wetness control unit that is shown in Figure 22 after they are installed together and placed in status 2;
Figure 25 is the perspective view of the juice extraction device bottom cover that is shown in Figure 2;
Figure 26 is the top view of the juice extraction device bottom cover that is shown in Figure 25;
Figure 27 is the top view of the filter net that is shown in Figure 2;
Figure 28 is the perspective view of the pedal blade that is shown in Figure 2;
Figure 29 is the perspective view of the meat grinding screw bolt that is shown in Figure 2;
Figure 30 is the perspective view of the meat grinding screen board that is shown in Figure 2;

### DETAILED DESCRIPTION

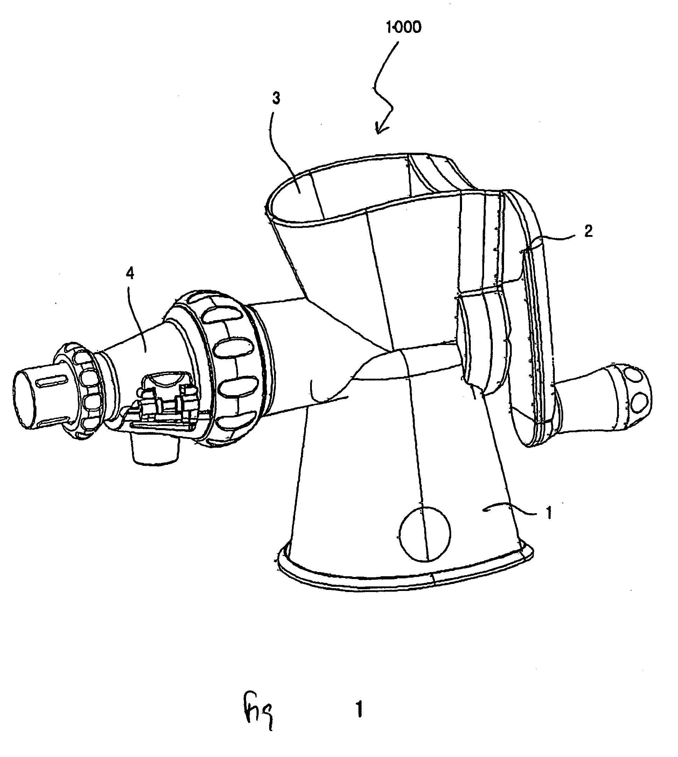

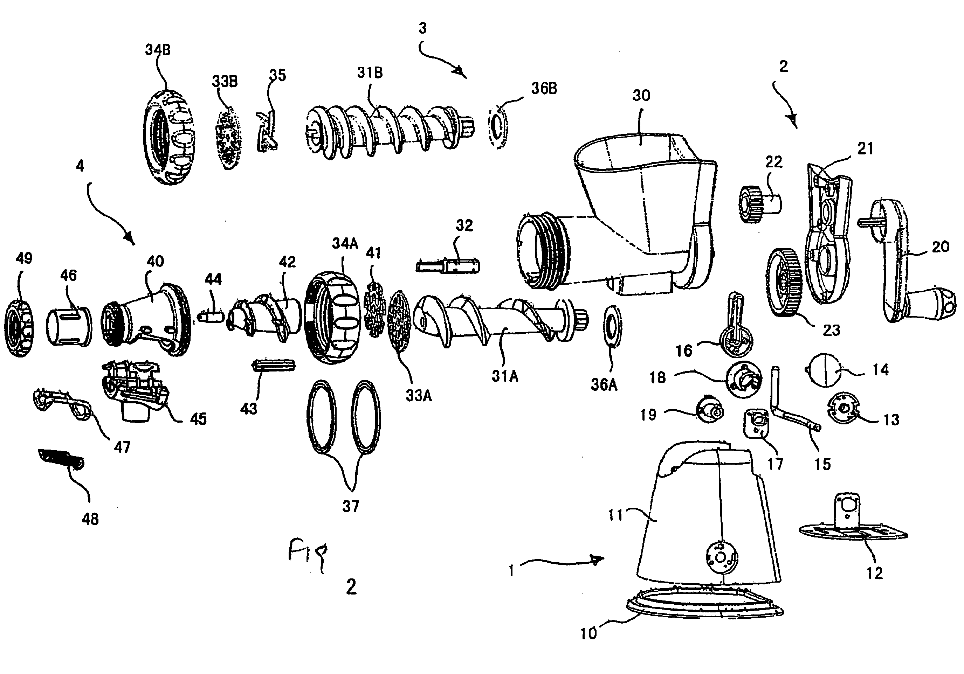

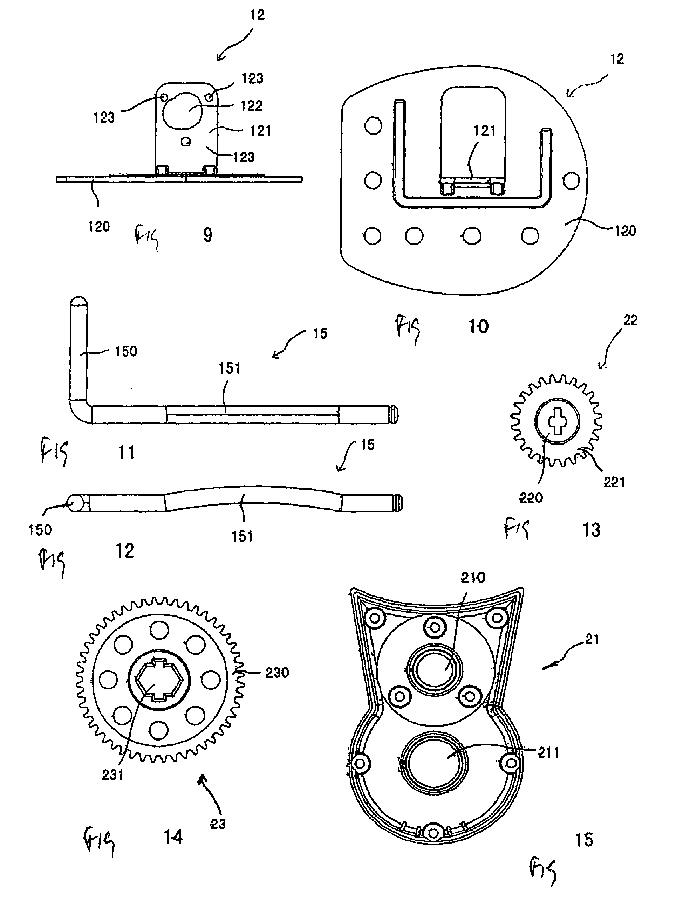

Figure 1 is the perspective view of a multi-function juicer 1000. Figure 2 is a dissembled view of multi-function juicer 1000. It includes: a vacuum mounting device 1 that is at the bottom of the multi-function juicer invention 1000; a mechanical device 2 that is on one side of the upper part of this multi-function juicer invention 1000; a juicer body 3 that is on top of the vacuum mounting device1; a aux juice extraction device 4 that is connected to the juicer body 3; and a meat grinding unit 5 that can replace some components inside the juice extraction device 1 to serve the meat grinding purpose. The vacuum mounting device 1 includes: a vacuum disk 10 that is at the bottom of the vacuum mounting device 1, whose shape is completely covered by the base unit 11, which is made of flexible materials; a base unit 11 that covers the vacuum disk 10, whose bottom shape matches to the shape of the vacuum disk 10 --- its center is empty so that the other components of the vacuum mounting device 1 can operate inside; besides, on both sides of it there is a hole to hold vacuum disk controller 15 inside them, and the saddle shaped top of base unit 11 can match the bottom of the device body 30; a vacuum disk shelf 12 that is placed on top of the vacuum disk 10, a vacuum disk shelf base 120 (will be stated later) having a shape that is similar to the shape of the inner side of vacuum disk 10 so that the two can stick together; at the same time, there is a vacuum disk shelf stand 121 at the center of vacuum disk shelf base 120 (as shown in Figure 9 and Figure 10). A bean shaped vacuum disk controller holding hole 122 locates at the center of vacuum disk shelf stand 121, which allows the vacuum disk controller 15 to go through to control the up and down movement of the vacuum disk shelf 12. To the outside of the vacuum disk controller holding hole 122 there are three vacuum disk shelf connection holes 123 (as shown in Figure 9 and Figure 10) to connect the shelf to vacuum disk shelf connector 17.

A vacuum disk controller 15 is placed inside the base unit 11, whose L shape can be divided into two parts: the short part is the controller-handler connection 150, which connects the controller with vacuum disk control handler 16. The longer part is the controller stick 151, which passes through the vacuum disk controller holding hole 122 to control the up and down movement of the vacuum disk shelf 12. The center portion is slightly extended out. When the vacuum disk controller 15 is rotated, the vacuum disk shelf 12 is raised. A controller locking unit 13 is placed in one side of the base 11 to lock the vacuum disk controller 15. In the center of it there is a hole that is the axle basis when vacuum disk controller 15 rotates. A controller cover 14 is used to cover one side of base 11. It is placed right on top of the controller locking unit 13.

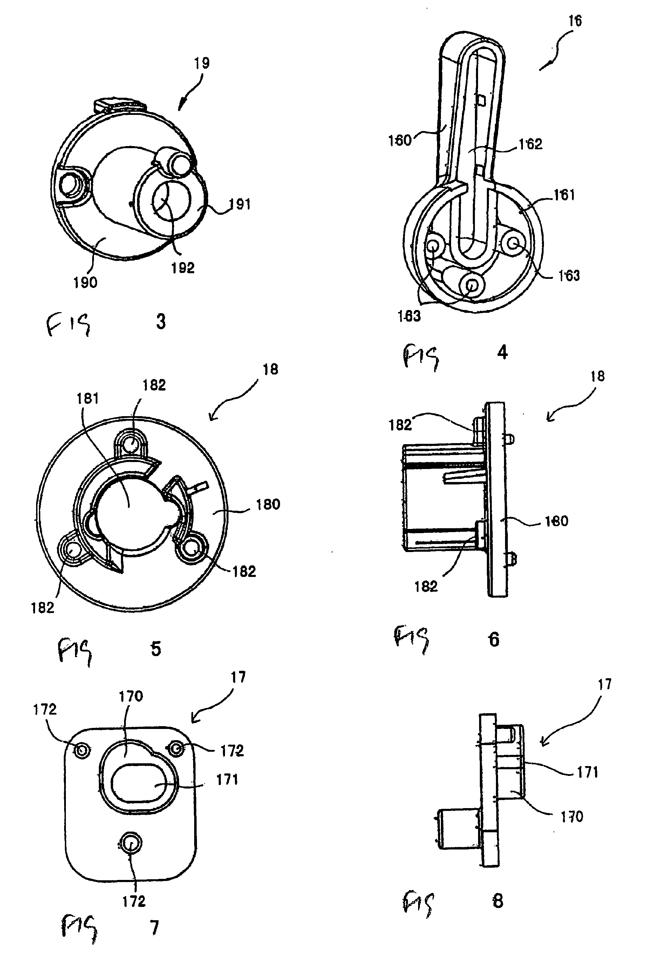

A vacuum disk control handle 16 is placed on the other side of the base 11 to control the movement of vacuum disk 10. It consists of two parts: handle 160 (as shown in Figure 4) and handle body 161 (as shown in Figure 4). In the center of handle 160 is the handle-controller holding hole 162 (as shown in Figure 4). There are three handle connection holes 163 in the inner surface of handle body 161 (as shown in Figure 4) to connect to controller sealer 18. A vacuum disk shelf connector 17 is installed right next to vacuum disk shelf stand 121. In the center of vacuum disk shelf connector 17 there is a bean shaped connector block 170 (as shown in Figure 7 and Figure 8), which matches the vacuum disk controller holding hole 122. In the center of connector block 170 there is a block controller holding hole 171 (as shown in Figure 7 and Figure 8), which allows vacuum disk controller 15 to pass through. On the outer rim there are three connector connection holes 172 (as shown in Figure 7 and Figure 8) that can be used to connect controller sealer 18 and vacuum disk 12. A controller locking unit 19 is right next to the inner surface of vacuum disk control handler 16. It is placed right between vacuum disk control handler 16 and controller sealer 18. A controller locking unit pole 191 (as shown in Figure 3) is provided in the center of the controller locking unit body 190 (as shown in Figure 3). Pole 191 is a large column with a small column attached to it. In its center is the locking unit controller passing hole 192 (as shown in Figure 3). A controller sealer 18 is placed inside base 11, which will support controller locking unit 19 together with vacuum disk handler 16. In the center of the controller sealer body 180 (as shown in Figure 5 and Figure 6), there is a sealer controller passing hole 181 (as shown in Figure 5 and Figure 6). Its shape is identical to the controller locking unit pole 191. There are three sealer connection holes 182 on the outside (as shown in Figure 5 and Figure 6), which are used to lock in controller sealer 18 and vacuum disk handler 16.

Besides, mechanical unit 2 includes: a gearbox that is in the center of the mechanical device. On the center of its surface there are a small gear holding pole 210 (as shown in Figure 15) and large gear holding pole 211 (as shown in Figure 15). A rotating handle 21 is outside gearbox 21. There are also a small gear 22 and a large gear 23, which are placed on the small gear holding pole 210 and large gear holding pole 211 respectively. The center axle of small gear 220 (as shown in Figure 13) is very long so that it can be connected to the rotating handle 20. The gear teeth 221 (as shown in Figure 13) mesh with the teeth of large gear 230 (as shown in Figure 14) to drive the motion. In the center of large gear 23 there is a large gear center hole 231 (as shown in Figure 14).

The body unit 3 includes: a body unit 30 that is placed on top of base 11. A shape of the bottom of the body unit 30 matches the saddle shaped top of base 11; and, a pedal blade 50 that can replace juice extraction screen board 41 to grind meat.

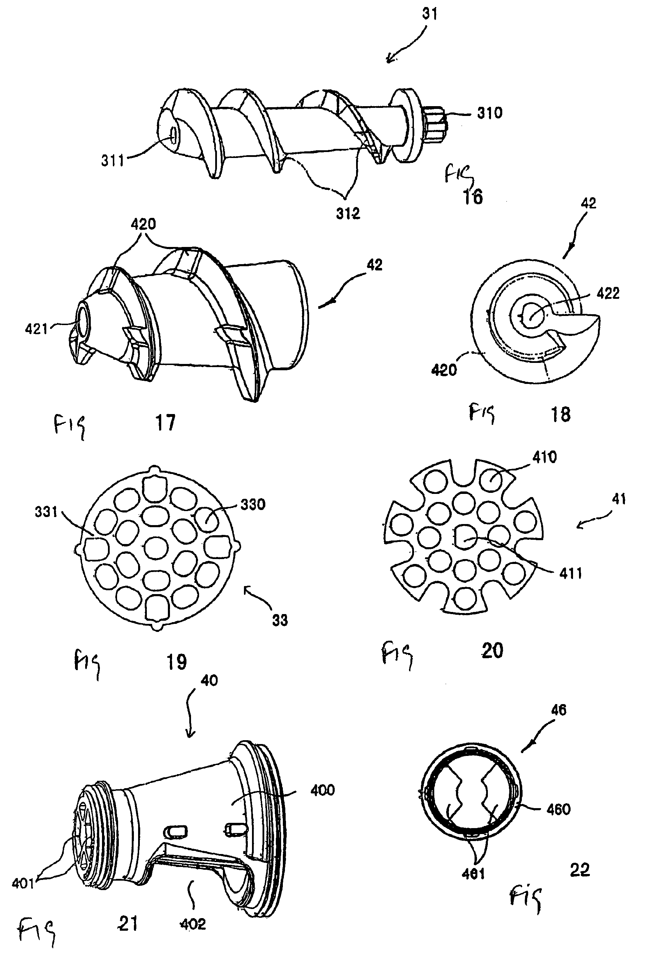

The juice extraction device 4 includes: a horizontal cone shaped juice extraction body unit 40 in the center of juice extraction device 4. To the right of the device body 40 (the bottom of the cone) is the inlet of body unit 400 (as shown in Figure 21). To the left (the tip of the cone) are two pulp outlets 401 (as shown in Figure 21). At the bottom of the body unit 40 there is a juice outlet 402 (as shown in Figure 21). A main screw bolt 51 A is placed inside the body unit 30, with a small bolt gear 510A at the tail (as shown in Figure 16), which can be placed completely into large gear center hole 231. On the head of the main screw bolt 51A is a screw thread 512A (as shown in Figure 16). It comes with a main screw bolt hole 511A on the front end (as shown in Figure 16). A main screw bolt skirt 55A is placed at the end of the main screw bolt 51A to seal the space between main screw bolt 51A and big gear 23, which ensures a smooth rotation. A small axle of main screw bolt 52 is placed inside main screw bolt hole 511A. It consists of two parts. The larger part is placed in the main screw bolt hole 511A. The smaller part extends outside main screw bolt 51A. A main screen board 53A is installed on the outlet of the body unit 30. The rim of every hole 530A (as shown in Figure 19) forms a sharp blade. The shape of the body 531A (as shown in Figure 19) matches the shape of the outlet of body unit 30. A body nut 54A is attached to the outlet of body unit 30, stuck to it are two water proof sealing rings 56. An aux screw bolt 42 is placed in the juice extraction device body 40. It is a cone shape with screw thread 420 (as shown in Figure 17 and Figure 18) on it. At the head there is an aux screw bolt axle hole 421 (as shown in Figure 17 and Figure 18), and the rear end there is an aux screw bolt tail axle hole 422 (as shown in Figure 17 and Figure 18). An aux screw bolt small axle 44 is placed in the aux screw bolt axle hole 421. It consists of two parts. The larger one hides inside the aux screw bolt axle hole 421. The smaller on extends outside aux screw bolt 42. An aux screw bolt tail axle 43 is placed inside the aux screw bolt tail axle hole 422. It is hollow, which will allow the extended portion of main screw bolt small axle 32 to insert in. Thus the main screw bolt 51A can drive the aux screw bolt 42 to rotate. A juice extraction screen board 41 is placed outside main screen board 53A. The edges of every hole 410 (as shown in Figure 20) form a sharp blade.

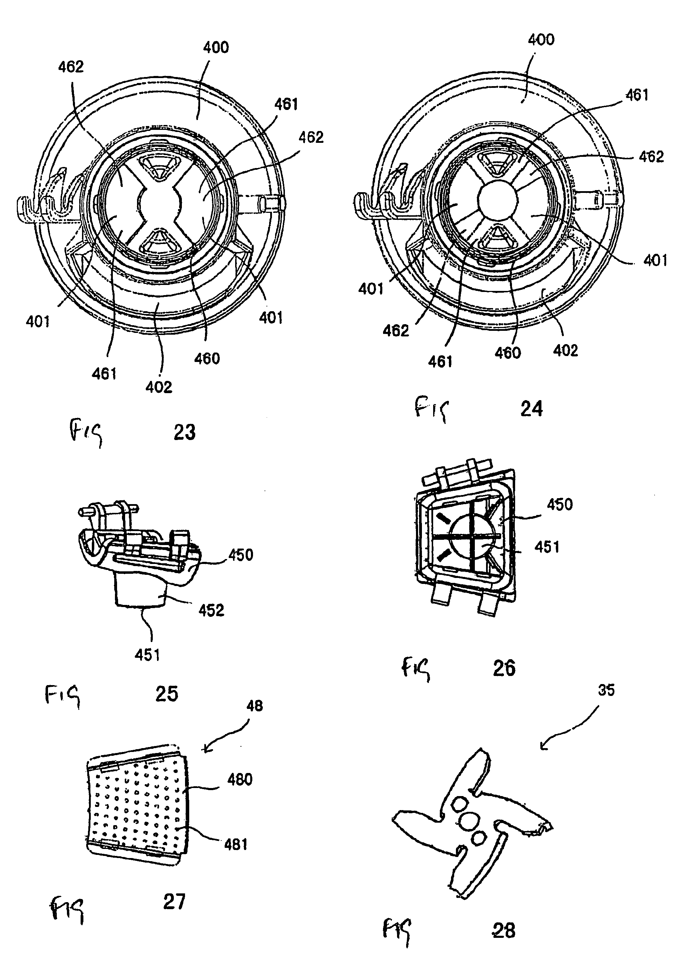

A device bottom cover 45 is installed beneath the device unit 40. Its body 450 (as shown in Figure 25 and Figure 26) is a twisted platform, which matches the shape of the outlet 402 of the juice extraction device body. At the center of the bottom cover 45 is a round bottom cover outlet 451 (as shown in Figure 25 and Figure 26). Right beneath this bottom cover outlet 451 there is a juice outlet pipe 452 (as shown in Figure 25 and Figure 26) extending from the bottom cover downward. A bottom cover sealer 47 surrounds this juice extraction bottom cover 45. Its shape makes sure that it covers the full edge of this juice extraction bottom cover 45 to avoid the leakage of juice between the juice extraction unit body 40 and the juice extraction device bottom cover 45. A filter net 48 is placed at the center of the juice extraction bottom cover 45. The shape of its body 480 (as shown in Figure 27) matches the center of the juice extraction bottom cover 45, which allows the filter net 480 to cover the bottom cover outlet 451.

Inside the filter net 480 are many juice filtering holes 481 (as shown in Figure 27). A wetness control unit 46 is connected to the pulp outlet 401 of the juice extraction device. The body 460 (as shown in Figure 22) is in the form of a cylinder. There are two pulp outlets 461 (as shown in Figure 22) on both sides of the side that is facing juice extraction device body 40. A juice extraction device nut 49 attaches to the outlet of the extraction device unit 40, which connects the wetness control unit 46 to the extraction device body 40.

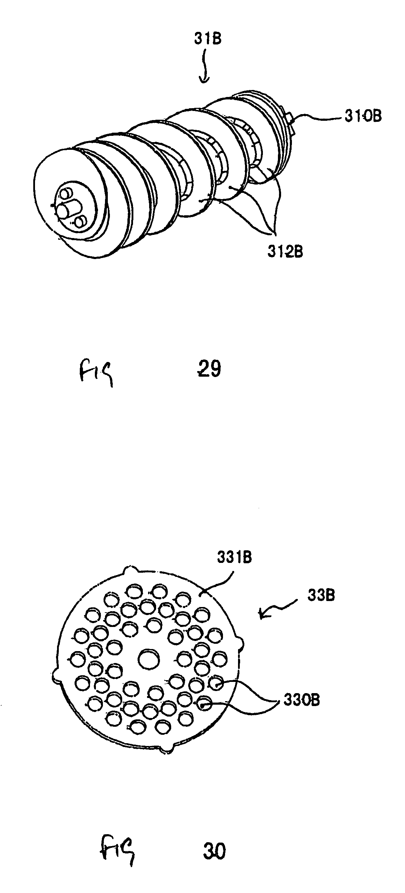

Finally, the meat grinding unit 5 includes: a meat grinding screw bolt 51 B that can replace the main screw bolt 51 A. It has a small screw bolt gear 510B (as shown in Figure 29) in the tail. The whole small screw bolt gear 510B can be placed in the large gear center hole 231 (as shown in Figure 29). The head of the meat grinding screw bolt 51 B is a cylinder with screw thread 512B (as shown in Figure 29). A meat grinding screw bolt skirt 55B is placed at the end of the meat grinding screw bolt 51 B. It seals the space between the tail of meat grinding screw bolt 51 B and the large gear 23, to make sure the rotation is smoother. A meat grinding screen board 53B can replace the main screen board 53A. All edges of the holes 530B (as shown in Figure 30) are sharp blades. Its shape 531 B (as shown in Figure 30) matches the outlet of device body 30. A body meat grinding nut 54B can replace the body nut 54A. And there is a pedal blade 50 that can replace the juice extraction screen board to serve the meat grinding purpose.

Figures 3 to 12 illustrate the different components of the vacuum mounting device 1 from different angles. It includes: Figure 3, the perspective view of the controller locking unit 19; Figure 4, the perspective view of the vacuum disk control handler 16; Figure 5 and Figure 6, the front view and the side view of the controller sealer 18; Figure 7 and Figure 8, the front view and the side view of the vacuum disk shelf connector 17; Figure 9 and Figure 10, the side view and the top view of the vacuum disk shelf 12; and Figure 11 and Figure 12, the top view and the front view of the vacuum disk controller 15. These Figures are a good supplement of the abovementioned installation process. They can also help to illustrate the operation of vacuum mounting device 1.

Before the operation of juicer 1000, the handle 160 is pulled down, so that the vacuum disk controller 15 that is inside the handle controller holding hole 162 is thereby also pulled down. Thus the handle controller connector 150 will move from the vertical status to horizontal status. The controller stick 151 will rotate in the connector controller holding hole 171. Then the bulging portion in the center will point upwards instead of horizontally. Since the connector control holding hole 171 is eliptical, the vacuum disk shelf connector 17 is raised, thus pulling vacuum disk shelf 12 and base vacuum disk 10 upwards. At the same time, the rim of vacuum disk 10 stays on the kitchen table, thus creating a vacuum place between the kitchen table and vacuum disk 10. This multi-function juicer will then be mounted to the table.

Figures 13 to 15 show the different components of the mechanical unit 2 of this invention from different angles. They include: Figure 13, the bottom view of the small gear 22; Figure 14, the bottom view of the large gear 23; and Figure 15, the top view of the gearbox 21. These Figures are supplementary to the abovementioned installation process. They can also help to illustrate the operation of mechanical unit 2.

During the operation of this juicer 1000, the user manually rotate the rotating handle 20, which drives the small gear 22 to rotate by pulling the small gear axle 220 that is connected to the rotating handler 20. Since the teeth of small gear 221 bite into the teeth 230 of large gear, the large gear 23 is driven to rotate, too.

Referring to Figures 16 to 27, different components of the juice extraction device 4 are shown from different angles. They include: Figure 16, the perspective view of the main screw bolt 51A; Figure 17 and Figure 18, the perspective view and the side view of the aux screw bolt 42; Figure 19, the bottom view of the main screen board 53A; Figure 20, the bottom view of the juice extraction screen board 41; Figure 21, the perspective view of the juice extraction body 40; Figure 22, the side view of the wetness control unit 46; Figure 23 and Figure 24, the combined front view of the juice extraction body that is shown in Figure 21 and the wetness control unit that is shown in Figure 22 after they are installed together and placed in status 1 and status 2; Figure 25 and Figure 26, the perspective view and the top view of the body 450 of the juice extraction device bottom cover 45; and Figure 27, the top view of the filter net.

These Figures are supplementary to the abovementioned installation process. They can also help to illustrate the operation of the juice extraction device 4. As explained above, when the large gear 23 rotates, since the screw bolt gear 510A is placed into the large gear center hole 231, the motion is passed to the main screw bolt 51A, thus drive the main screw bolt 51A to rotate. The screw thread 512A will generate a forward motion when rotated together with the main screw bolt 51A. Thus the food inside the device body 30 will be pushed forward towards the outlet. When the food is pushed through the holes 530A of main screen board 53A, it is smashed by the sharp blades and thus reduced the volume. Besides, since the main screw bolt small axle 32 passes through both the central hole 411 of the juice extraction screen board 41 and the aux screw bolt tail axle 43, and the central hole 411 and the aux screw bolt tail axle 43 has the same profile shapes, the juice extraction screen board 41 and aux screw bolt 42 are also be driven to rotate. Food will be further smashed by the sharp edges of the holes 410 on the juice extraction screen board 41. Then it will enter the juice extraction device body 40 for further processing. When the pretreated food enters the juice extraction device body 40 through the juice extraction device body 40 entrance 400, the screw thread 420 on the aux screw bolt 42 will rotate together with the main screw bolt 51A. This, too, will generate a forward motion. Thus the food in the juice extraction device body 40 gets pressed in a small space.

The cone shape of juice extraction device body 40 will also make the pressure on the food inside larger and larger, thus separating juice from pulp. Pulp will be pushed out from the juice extraction device body 40 through the juice extraction device pulp outlet 401 by the forward moving aux screw bolt screw thread 420, whilst juice flows down to exit the juice extraction device body 40 through the juice extraction device juice outlet 402 by gravity.

After the pulp leaves the juice extraction device body 40, it passes through the wetness control unit pulp outlet 461 of the wetness control unit 46, to be discharged from the multi-function juicer 1000.

As shown in Figure 23, when the juice extraction device body 40 and the wetness control unit are connected in status 1, the juice extraction device pulp outlet 401 is completely overlapped with the wetness control unit pulp outlet 461. The actual pulp outlet 462 is of the same size as the two outlets. A larger actual pulp outlet 462 makes the pulp to be released faster, shortens the time that food stays in the juice extraction device body 40 and device body 30. That makes the separation of pulp and juice less complete. Thus the pulp is wetter, and less juice is produced.

On the other hand, as shown in Figure 24, when the juice extraction device body 40 and the wetness control unit are connected in status 2, the juice extraction device pulp outlet 401 is not completely overlapped with the wetness control unit pulp outlet 461. The actual pulp outlet 462 is of a smaller size than the two outlets. A smaller actual pulp outlet 462 makes the pulp to be released slower, increases the time that food stays in the juice extraction device body 40 and device body 30. That makes the separation of pulp and juice more complete. Thus the pulp is dryer, and more juice is produced.

From the illustration above we can see that, if the user wants to produce juice from juicier fruits, he must adjust the wetness control unit 46 to status 1, to make the pulp to discharge easily, and get juice. On the contrary, if the user wants to get juice from less juicier fruits, he needs to adjust the wetness control unit 46 to status 2, thus increases the time that food stays in the juice extraction device body 40 and device body 30. That will help to produce more juice from the fruit. When the juice trickles down the juice extraction device juice outlet 402 to leave the juice extraction device body 40, it will pass the juice filter 481 on the filter net 480 to remove the small pulps and particles. It will then be discharged out of the multi-function juicer 1000 through the bottom cover outlet 451 via the juice outlet pipe 452.

Finally, Figure 28 to Figure 30 show the different components of the meat grinding device 5 of this invention from different angles. They include: Figure 28, the perspective view of the pedal blade 50; Figure 29, the perspective view of the meat grinding screw bolt 51B; and Figure 30, the bottom view of the meat grinding screen board 53B. These components can switch the usage of the multi-function juicer 1000 from juice extraction to meat grinding. First, remove the whole juice extraction device 4. Then, place the whole meat grinding device 5 into the device body 30. Replace the main screw bolt 51A with meat grinding screw bolt 51 B. Replace the main screen board 53A with meat grinding screen board 53B. Then place pedal blade 50 between the meat grinding screw bolt 51 B and the meat grinding screen board 53B. Then replace body nut 54A with meat grinding body nut 54B. Then the juice extraction device 1000 will be converted into a meat grinder, which is very convenient.

From the abovementioned structure we can see that, based on the creative design of the invention, the multi-function juicer is very easy to operate. First, rotate vacuum disk control handler 16 to mount the juicer 1000 on the kitchen table. Then, repetitively rotate rotate handle 20 to drive the screw bolt 51A and 42 and pedal blade 50 or juice extraction screen board 41 to rotate. Thus, the meat or fruit in the device body unit 30 will be smashed into small pieces by the pedal blade 50 or juice extraction screen board 41 to be further processed into ground meat or fruit juice. In addition to change the configuration to serve different purposes, multi-function juicer 1000 can adjust the wetness control unit 46 to control the detention time of food in the juice extraction device body 40 and device body 30. Thus it creates a higher performance for juice production for different fruits. It does not need extra process to separate juice from pulp, or to adjust the wetness of the pulp, which is very convenient.

Throughout the description and claims of this specification, the words "comprise" and "contain" and variations of the words, for example "comprising" and "comprises", means "including but not limited to", and is not intended to (and does not) exclude other moieties, additives, components, integers or steps.

## Claims

1. A foodstuffs processing device (1000) comprising:
a base unit (1),
a main body (30) provided above the base unit, comprising:
a main body aperture configured to receive foodstuffs into the body;
a juice extraction device comprising means (31A) for applying pressure to foodstuffs received into the body;
a solids outlet (401);
a liquids outlet (402); and
a wetness control unit (46), the wetness control unit comprising means for changing a size of the solids outlet, **characterized in that**
the solids outlet (401) comprises a first member having an aperture (401) formed therein, and the means for changing a size of the solids outlet comprises a second member (440) having a corresponding aperture (461) formed therein and provided in juxtaposition with the first member, wherein the wetness control unit (46) is operable to move one of the members with respect to the other member thereby to vary a degree of overlap of the apertures formed in the first and second members.

2. A device as claimed in claim 1 wherein the base unit (1) comprises a vacuum mounting base unit (11) on the bottom of the multi-function juicer, having:
a vacuum disk (10) that is on the bottom of the mounting vacuum base unit;
a base that covers the abovementioned vacuum disk;
a vacuum disk shelf (12) on top of the vacuum disk (10);
a vacuum disk controller (15) inside the base (1);
a controller fixing unit that is on the side of the base to lock the vacuum base controller
a controller cover that is used to cover one side of the base;
a vacuum disk control handle (16) on the other side of the base to control the operation of the vacuum disk;
a vacuum disk shelf connector that is next to vacuum disk shelf stand;
a controller locking unit that (19) is right next to the inner side of the abovementioned vacuum control handler; and
a controller sealer (18) that is inside the base, which, together with the vacuum base control handler (16), will hold the controller locking unit.

3. A device as claimed in claim 1 or claim 2, further comprising:
a mechanical device (2) on one side of the upper part of multi-function juicer. This mechanical device includes;
a gearbox (21) at the centre of the mechanical device;
a rotating handler (20) that is placed outside the gearbox; and
a big gear (23) and a small gear (22) inside the gearbox (21).

4. A device as claimed in any one of claims 1 to 3, wherein the juice extraction device includes:
a juice extraction device body (3) that is at the centre of the juice extraction device;
a main screw bolt (51 A) inside the juice extraction device body;
a main screw bolt skit (55A) that is placed at the end of the main screw bolt;
a small axle of the main screw bolt (52) that is inside the main screw bolt;
a main screen board (53A) that is at the outlet of the juice extraction device body;
a body nut (54A) that is attached to the abovementioned outlet of the juice extraction device body;
two sealing rings (56) that are closely attached to the body nut;
an auxiliary screw bolt (42) that is inside the juice extraction device body;
a small bolt of the aux screw bolt that is placed inside the aux screw bolt;
a juice extraction screen board (41) that is right on the outside of the main screen board (53A);
a juice extraction device bottom cover (45) that is placed on the bottom of the juice extraction device body;
a bottom cover sealer (47) that surrounds that rim of the juice extraction device bottom cover,
a filter net (48) that is placed on the centre of the juice extraction device bottom cover;
a wetness Control unit (46) that is connected to the outlet of the juice extraction device body; and
a juice extraction device nut that is tightened to the outlet of the juice extraction device body.

5. A device as claimed in any one of claims 1 to 4 further comprising:
a meat grinding unit (5) that can be exchanged with some of the components in the juice extraction device to serve meant grinding purpose, including:
a meat grinding screw bolt (51B) that can replace the main screw bolt to grind meat;
a meat grinding screw bolt skirt (55B) that is placed at the tail of the meat grinding screw bolt (51B);
a meat grinding screen board (53B) that can replace the mains screen board to grind meat;
a meat grinding body nut that can replace the body nut to grind meat; and
a pedal blade (50) that can replace the juice extraction screen board to grind meat

6. A device as claimed in claim 2 or any of claims 3 to 5 depending through claim 2 wherein there is a bulging part in the centre of a longer portion of a controller stick (151) of the vacuum disk controller (15), the controller being operable between a vertical position wherein the centre of the controller extends horizontally, and a horizontal position wherein the centre of the controller extends vertically.

7. The device as claimed in claim 6 wherein the center of the vacuum disk controller (15) is placed in the connector controller holding hole.

8. A device as claimed in claim 2 or any one of claims 3 to 7 as depending through claim 2 wherein a vacuum disk shelf base (120) is provided, having the same shape as the vacuum disk.

9. A device as claimed in claim 8 wherein a standing vacuum disk shelf stand (121) is provided in the center of the vacuum disk shelf, and a vacuum disk shelf controller holding hole in the center of the vacuum disk shelf stand, said hole being connectable to a vacuum disk shelf connector, the center of a vacuum disk controller being configured to be installed inside the connector controller holding hole, wherein the controller is rotatable.

10. A device as claimed in claim 8 or claim 9 wherein the vacuum disk (10) is flexible, the disk being operable to deform under external force.

11. A device as claimed in claim 4 or any one of claims 5 to 10 depending through claim 4 wherein the main screw bolt small axle (52) comprises a larger member, which is provided in the main screw bolt axle hole, and a smaller member that extends outside the main screw bolt.

12. A device as claimed in claim 11 wherein a profile section of the smaller member of the main screw bolt small axle (52) corresponds to the shape of the juice extraction screen board (41) and auxiliary screw bolt tail axle profile, such that the main screw bolt small axle is operable to drive the juice extraction screen board and auxiliary screw bolt to rotate together.

13. A device as claimed in claim 5 or any one of claims 6 to 12 depending through claim 5 wherein two small angle axles on top of the meat grinding screw (51B) bolt match corresponding holes on the pedal blade (50) such that the pedal blade (50) may be rotatably driven.

14. A device as claimed in claim 4 or any one of claims 5 to 13 depending through claim 4 wherein there is a screw thread formed around the main screw bolt (51A), the device being operable to drive the screw thread to rotate together with the main screw bolt, thereby to push foodstuffs in the device forward towards the outlet.

15. A device as claimed in claim 4 or any one of claims 5 to 14 depending through claim 4 wherein a screw thread is provided around the auxiliary screw bolt (42), the device being operable to drive the screw thread to rotate together with the auxiliary screw bolt, thereby to push foodstuffs inside the device body towards the outlet.

16. The device as claimed in claim 5 or any one of claims 6 to 15 depending through claim 5 wherein there is a screw thread provided around the meat grinding screw bolt (51 B), the device being operable to drive the screw thread to rotate together with the meat grinding screw bolt, thereby to push foodstuffs in the device body towards the outlet.

17. A device as claimed in claim 5 or any one of claims 6 to 16 depending through claim 5 wherein the main screen board (53A) is of a shape corresponding to the meat grinding screen board, holes provided in the meat grinding screen board (53B) being smaller than holes provided in the main screen board, the holes on the meat grinding screen board being of a larger number per unit area than the holes on the main screen board.

18. A device as claimed in claim 4 or any one of claims 5 to 17 depending through claim 4 wherein the juice extraction device body (3) is provided with an entrance aperture of a first size, the body being shaped such that foodstuffs entering the juice extraction device body through the entrance aperture is compressed as the material is forced into the juice extraction device body away from the entrance aperture.

19. A device as claimed in claim 4 or any one of claims 5 to 18 depending through claim 4 wherein the solids outlet is provided in said juice extraction device body (3).

20. The device as claimed in claim 4 or any one of claims 5 to 19 depending through claim 4 wherein a liquids outlet is provided in said juice extraction device body (3).

21. A device as claimed in any preceding claim wherein the solids outlet comprises an aperture on either side of a portion of the wetness control unit (46) facing the device body.

22. A device as claimed in claim 21 wherein, with the wetness control unit (46) installed with the juice extraction device body (3), a plane of an aperture of the solids outlet is substantially parallel to a plane of the aperture of the liquids outlet.

## Patentansprüche

1. Lebensmittelverarbeitungsvorrichtung (1000), umfassend:
eine Sockeleinheit (1),
ein über der Sockeleinheit vorgesehenes Hauptgehäuse (30), umfassend:
eine Hauptgehäuseöffnung, dazu ausgelegt, Lebensmittel in das Gehäuse aufzunehmen;
eine Entsaftungsvorrichtung, welche Mittel (31 A) zum Ausüben von Druck auf in dem Gehäuse aufgenommene Lebensmittel umfasst; einen Feststoff-Auslass (401);
einen Flüssigkeits-Auslass (402); und
eine Feuchtigkeits-Regelungseinheit (46), wobei die Feuchtigkeits-Regelungseinheit Mittel zur Veränderung einer Abmessung des Feststoff-Auslasses umfasst, **dadurch gekennzeichnet, dass**
der Feststoff-Auslass (401) ein erstes Element umfasst, in welchem eine Öffnung (401) gebildet ist, und dass das Mittel zur Veränderung einer Abmessung des Feststoff-Auslasses ein zweites Element (460) umfasst, in welchem eine entsprechende Öffnung (461) gebildet ist und
welches in einer Position neben dem ersten Element vorgesehen ist, wobei die Feuchtigkeits-Regelungseinheit (46) derart betätigt werden kann, dass sie eines der Elemente in Bezug auf das andere Element bewegt, um **dadurch** einen Grad der Überlappung der in dem ersten und zweiten Element gebildeten Öffnungen zu variieren.

2. Vorrichtung nach Anspruch 1, wobei die Sockeleinheit (1) eine Unterdruckaufbau-Sockeleinheit (11) am Boden des Multifunktions-Entsafters umfasst, mit:
einer Unterdruckscheibe (10), welche sich am Boden der Unterdruckaufbau-Sockeleinheit befindet;
einem Sockel, welcher die vorerwähnte Unterdruckscheibe bedeckt; einer Unterdruckscheiben-Ablage (12) auf der Unterdruckscheibe (10); einer Unterdruckscheiben-Steuerung (15) innerhalb des Sockels (1); einer Steuerungs-Befestigungseinheit, welche sich neben dem Sockel befindet, um die Unterdruckscheiben-Steuerung zu arretieren;
einer Steuerungs-Abdeckung, welche verwendet wird, um eine Seite des Sockels abzudecken;
einem Unterdruckscheiben-Steuerungs-Griff (16) auf der anderen Seite des Sockels, um den Betrieb der Unterdruckscheibe zu steuern;
einem Unterdruckscheiben-Ablagen-Anschluss, der sich neben dem Unterdruckscheiben-Ablagen-Fuß befindet;
einer Steuerungs-Arretierungseinheit (19), welche sich direkt neben der Innenseite des vorerwähnten Unterdrucksteuerungs-Griffs befindet; und
einem Steuerungs-Versiegeler (18), welcher sich innerhalb des Sockels befindet, welcher, zusammen mit dem Unterdruck-Sockel-Steuerungs-Griff (16), die Steuerungs-Arretierungseinheit halten wird.

3. Vorrichtung nach Anspruch 1 oder Anspruch 2, ferner umfassend:
eine mechanische Vorrichtung (2) auf einer Seite des oberen Teils des Multifunktions-Entsafters. Diese mechanische Vorrichtung umfasst:
einen Getriebekasten (21) in der Mitte der mechanischen Vorrichtung; einen rotierenden Griff (20), welcher außerhalb des Getriebekastens platziert ist; und
einen großen Antrieb (23) und einen kleinen Antrieb (22) innerhalb des Getriebekastens (21).

4. Vorrichtung nach einem beliebigen der Ansprüche 1 bis 3, wobei die Entsaftungsvorrichtung Folgendes umfasst:
ein Entsaftungsvorrichtungsgehäuse (3), das sich in der Mitte der Entsaftungsvorrichtung befindet;
einen Haupt-Schraubenbolzen (51 A) innerhalb des Entsaftungsvorrichtungsgehäuses;
einen Haupt-Schraubenbolzenkragen (55A), welcher am Ende des Haupt-Schraubenbolzens platziert ist;
eine kleine Achse des Haupt-Schraubenbolzens (52), welche sich innerhalb des Haupt-Schraubenbolzens befindet;
eine Haupt-Abschirmplatte (53A), welche sich am Auslass des Entsaftungsvorrichtungsgehäuses befindet;
eine Gehäusemutter (54A), welche an dem vorerwähnten Auslass des Entsaftungsvorrichtungsgehäuses befestigt ist;
zwei Dichtringe (56), welche dicht an der Gehäusemutter befestigt sind;
einen zusätzlichen Schraubenbolzen (42), welcher sich innerhalb des Entsaftungsvorrichtungsgehäuses befindet;
einen kleinen Bolzen des zusätzlichen Schraubenbolzens, welcher innerhalb des zusätzlichen Schraubenbolzens platziert ist;
eine Entsaftungs-Abschirmplatte (41), welche sich direkt außen an der Haupt-Abschirmplatte (53A) befindet;
eine Entsaftungsvorrichtungs-Bodenabdeckung (45), die auf dem Boden des Entsaftungsvorrichtungsgehäuses platziert ist;
einen Bodenabdeckungs-Versiegeler (47), welcher den Rand der Entsaftungsvorrichtungs-Bodenabdeckung umgibt;
ein Filternetz (48), das auf die Mitte der Entsaftungsvorrichtungs-Bodenabdeckung platziert ist;
eine Feuchtigkeits-Regelungseinheit (46), welche an den Auslass des Entsaftungsvorrichtungsgehäuses angeschlossen ist; und
eine Entsaftungsvorrichtungsgehäusemutter, welche am Auslass des Entsaftungsvorrichtungsgehäuses festgezogen ist.

5. Vorrichtung nach einem beliebigen der Ansprüche 1 bis 4, ferner umfassend:
eine Fleischzerkleinerungseinheit (5), welche gegen einige der Bauteile in der Entsaftungsvorrichtung ausgetauscht werden kann, um zum Fleischzerkleinern zu dienen, umfassend:
einen Fleischzerkleinerungs-Schraubenbolzen (51 B), welcher den Haupt-Schraubenbolzen ersetzen kann, um Fleisch zu zerkleinern; einen Fleischzerkleinerungs-Bolzenkragen (55B), welcher am Ende des Fleischzerkleinerungs-Schraubenbolzens (51 B) platziert ist;
eine Fleischzerkleinerungs-Abschirmplatte (53B), welche die Haupt-Abschirmplatte ersetzen kann, um Fleisch zu zerkleinern;
eine Fleischzerkleinerungs-Gehäusemutter, welche die Gehäusemutter ersetzen kann, um Fleisch zu zerkleinern; und
ein Hebelblatt (50), welches die Entsaftungs-Abschirmplatte ersetzen kann, um Fleisch zu zerkleinern.

6. Vorrichtung nach Anspruch 2 oder einem beliebigen der Ansprüche 3 bis 5, wenn abhängig von Anspruch 2, wobei sich ein aufgeweiteter Teil in der Mitte eines längeren Abschnitts eines Steuerungsstabes (151) der Unterdruckscheiben-Steuerung (15) befindet, wobei die Steuerung zwischen einer vertikalen Stellung, bei der die Mitte der Steuerung horizontal verläuft, und einer horizontalen Stellung, bei der die Mitte der Steuerung vertikal verläuft, betätigbar ist.

7. Vorrichtung nach Anspruch 6, wobei die Mitte der Unterdruckscheiben-Steuerung (15) in der Anschluss-Steuerungs-Halteöffnung platziert ist.

8. Vorrichtung nach Anspruch 2 oder einem beliebigen der Ansprüche 3 bis 7, wenn abhängig von Anspruch 2, wobei ein Unterdruckscheiben-Ablagensockel (120) vorgesehen ist, welcher die gleiche Form wie die Unterdruckscheibe aufweist.

9. Vorrichtung nach Anspruch 8, wobei ein aufrechter Unterdruckscheiben-Ablagen-Fuß (121) in der Mitte der Unterdruckscheiben-Ablage vorgesehen ist und eine Unterdruckscheiben-Ablagen-Steuerungs-Halteöffnung in der Mitte des Unterdruckscheiben-Ablagen-Fußes, wobei diese Öffnung an einen Unterdruckscheiben-Ablagen-Anschluss angeschlossen werden kann, wobei die Mitte einer Unterdruckscheiben-Steuerung ausgelegt ist, um innerhalb der Anschluss-Steuerungs-Halteöffnung angebracht zu werden, in welcher die Steuerung drehbar ist.

10. Vorrichtung nach Anspruch 8 oder Anspruch 9, wobei die Unterdruckscheibe (10) flexibel ist, wobei die Scheibe so betätigt werden kann, dass sie sich unter der Einwirkung äußerer Kraft verformt.

11. Vorrichtung nach Anspruch 4 oder einem beliebigen der Ansprüche 5 bis 10, wenn abhängig von Anspruch 4, wobei die kleine Achse (52) des Haupt-Schraubenbolzens ein größeres Element umfasst, welches in der Öffnung der Achse des Haupt-Schraubenbolzens vorgesehen ist, und ein kleineres Element, das außerhalb des Haupt-Schraubenbolzens verläuft.

12. Vorrichtung nach Anspruch 11, wobei ein Profilabschnitt des kleineren Elements der kleinen Achse (52) des Haupt-Schraubenbolzens der Form der Entsaftungs-Abschirmplatte (41) und des Profils der Achse am Ende des zusätzlichen Schraubenbolzens entspricht, so dass die kleine Achse des Haupt-Schraubenbolzens so betätigt werden kann, dass sie die Entsaftungs-Abschirmplatte und den zusätzlichen Schraubenbolzen so antreibt, dass sie sich zusammen drehen.

13. Vorrichtung nach Anspruch 5 oder einem beliebigen der Ansprüche 6 bis 12, wenn abhängig von Anspruch 5, wobei zwei kleine Winkelachsen auf dem Fleischzerkleinerungs-Schraubenbolzens (51 B) zu entsprechenden Öffnungen an dem Hebelblatt (50) passen, so dass das Hebelblatt (50) drehbar angetrieben werden kann.

14. Vorrichtung nach Anspruch 4 oder einem beliebigen der Ansprüche 5 bis 13, wenn abhängig von Anspruch 4, wobei ein Schraubengewinde um den Haupt-Schraubenbolzen (51 A) herum gebildet ist, wobei die Vorrichtung so betätigt werden kann, dass sie das Schraubengewinde antreibt, so dass es sich zusammen mit dem Haupt-Schraubenbolzen dreht und **dadurch** Lebensmittel in der Vorrichtung vorwärts zum Auslass hin drückt.

15. Vorrichtung nach Anspruch 4 oder einem beliebigen der Ansprüche 5 bis 14, wenn abhängig von Anspruch 4, wobei ein Schraubengewinde um den zusätzlichen Schraubenbolzen (42) herum vorgesehen ist, wobei die Vorrichtung so betätigt werden kann, dass sie das Schraubengewinde antreibt, so dass es sich zusammen mit dem zusätzlichen Schraubenbolzen dreht und **dadurch** Lebensmittel innerhalb des Vorrichtungsgehäuses zum Auslass hin drückt.

16. Vorrichtung nach Anspruch 5 oder einem beliebigen der Ansprüche 6 bis 15, wenn abhängig von Anspruch 5, wobei ein Schraubengewinde um den Fleischzerkleinerungs-Schraubenbolzen (51 B) herum vorgesehen ist, wobei die Vorrichtung so betätigt werden kann, dass sie das Schraubengewinde antreibt, so dass es sich zusammen mit dem Fleischzerkleinerungs-Schraubenbolzen dreht und **dadurch** Lebensmittel in dem Vorrichtungsgehäuse zum Auslass hin drückt.

17. Vorrichtung nach Anspruch 5 oder einem beliebigen der Ansprüche 6 bis 16, wenn abhängig von Anspruch 5, wobei die Haupt-Abschirmplatte (53A) eine der Fleischzerkleinerungs-Abschirmplatte entsprechende Form aufweist, wobei in der Fleischzerkleinerungs-Abschirmplatte (53B) vorgesehene Öffnungen kleiner sind als in der Haupt-Abschirmplatte vorgesehene Öffnungen sind, wobei die Öffnungen in der Fleischzerkleinerungs-Abschirmplatte in größerer Zahl pro Flächeneinheit vorhanden sind als die Öffnungen in der Haupt-Abschirmplatte.

18. Vorrichtung nach Anspruch 4 oder einem beliebigen der Ansprüche 5 bis 17, wenn abhängig von Anspruch 4, wobei das Entsaftungsvorrichtungsgehäuse (3) mit einer Eingangsöffnung mit einer ersten Abmessung versehen ist, wobei das Gehäuse so geformt ist, dass durch die Eingangsöffnung in das Entsaftungsvorrichtungsgehäuse eintretende Lebensmittel komprimiert werden, wenn das Material in das Entsaftungsvorrichtungsgehäuse von der Eingangsöffnung weg gepresst wird.

19. Vorrichtung nach Anspruch 4 oder einem beliebigen der Ansprüche 5 bis 18, wenn abhängig von Anspruch 4, wobei der Feststoff-Auslass in dem Entsaftungsvorrichtungsgehäuse (3) vorgesehen ist.

20. Vorrichtung nach Anspruch 4 oder einem beliebigen der Ansprüche 5 bis 19, wenn abhängig von Anspruch 4, wobei ein Flüssigkeits-Auslass in dem Entsaftungsvorrichtungsgehäuse (3) vorgesehen ist.

21. Vorrichtung nach einem beliebigen vorangehenden Anspruch, wobei der Feststoff-Auslass eine Öffnung auf jeder Seite eines Abschnitts der Feuchtigkeits-Regelungseinheit (46) umfasst, welche dem Vorrichtungsgehäuse zugewandt ist.

22. Vorrichtung nach Anspruch 21, wobei, wenn die Feuchtigkeits-Regelungseinheit (46) mit dem Entsaftungsvorrichtungsgehäuse (3) angebracht ist, eine Ebene der Öffnung des Feststoff-Auslasses im Wesentlichen parallel zu einer Ebene der Öffnung des Flüssigkeits-Auslasses ist.

## Revendications

1. Dispositif pour le traitement de produits alimentaires (1000) comprenant :
Une unité de base (1).
Un corps principal (30) prévu au dessus de l'unité de base, comprenant :
- une ouverture de corps principal configurée pour recevoir des produits alimentaires dans le corps;
- un dispositif d'extraction de jus comprenant des moyens (31 A) pour appliquer de la pression sur les produits alimentaires reçus dans ledit corps;
- une sortie de solide (401) ;
- une sortie de liquide (402) ; et
- une unité de contrôle d'humidité, cette dernière comprenant des moyens pour modifier la taille de la sortie des solides :
**caractérisé en ce que** la sortie de solide (401) comporte un premier élément présentant une ouverture (401) formée dans celui-ci, et le moyen pour changer la taille de la sortie de solide comporte un second élément (460) ayant une ouverture correspondante (461) formée dans celui-ci, et prévu en juxtaposition avec le premier élément, tandis que l'unité de contrôle d'humidité (406) est actionnable pour déplacer un des éléments par rapport à l'autre élément pour ainsi faire varier le degré de recouvrement des ouvertures formées dans les premiers et seconds éléments.

2. Dispositif selon la revendication 1, dans lequel l'unité de base 1 comporte une unité de base de montage à vide (11), sur la base du presseur de jus multifonctions, ayant :
Un disque (10) à vide qui est sur la base de l'unité de base à vide de montage ;
Une base qui couvre ledit disque à vide ;
Un support (12) de disque à vide sur le dessus du disque à vide (10)
Un contrôleur de disque à vide (15) dans la base 1
Une unité de fixation de contrôleur qui est sur le côté de la base pour bloquer le contrôleur de base à vide;
Un capot de contrôleur qui est utilisé pour couvrir un côté de la base ;
Une poignée (16) de commande de disque à vide sur l'autre côté de la base pour commander le fonctionnement du disque à vide ;
Un connecteur de support de disque à vide qui est proche du rebord de support de disque à vide ;
Une unité de blocage de contrôleur (19) qui est juste à côté de la face intérieure de ladite commande de poignée à vide ; et
Un scellement (18) de contrôleur qui est à l'intérieur de la base, et qui avec la poignée (16) de commande de base à vide, tient l'unité de blocage de contrôleur.

3. Dispositif selon la revendication 1 ou 2, comprenant en outre un dispositif de mécanique sur un côté de la partie supérieure du presseur à jus multifonctions, ledit dispositif mécanique incluant:
Une boîte d'engrenage (21) au centre du dispositif mécanique ;
Une poignée (20) à rotation placée à l'extérieur de la boîte à engrenage ; et
Un grand engrenage (23) et un petit engrenage (22) dans la boîte à engrenage (21).

4. un dispositif selon l'une des revendications 1 à 3, **caractérisé en ce que** le dispositif d'extraction de jus inclu :
Un corps (3) de dispositif d'extraction de jus qui est au centre du dispositif d'extraction de jus ;
Un écrou à vis (51 A) principal à l'intérieur du corps de dispositif d'extraction de jus;
Un écrou (55A) à vis à collerette principal qui est placé à l'extrémité de l'écrou à vis principal;
Un petit axe de l'écrou à vis (52) principal qui est à l'intérieur de l'écrou à vis principal;
Un plateau (53A) d'écran principal qui est à la sortie du corps de dispositif d'extraction de jus ;
Un écrou (54A) de corps qui est attaché à la sortie ci-dessus du corps de dispositif d'extraction ;
Deux bagues de scellement (56) qui sont fermement attachées à l'écrou de corps ;
Un boulon à vis (42) auxiliaire qui est à l'intérieur du corps de dispositif d'extraction de jus ;
Un petit boulon de l'écrou à vis auxiliaire qui est placé à l'intérieur de l'écrou à vis auxiliaire;
Un plateau (41) d'écran d'extraction de jus qui est juste à l'extérieur du plateau principal d'écran (53A) ;
Un capot (45) de base de dispositif d'extraction de jus (45) qui est placé sur la base du corps du dispositif d'extraction de jus ;
Un scellement (47) de recouvrement inférieur qui entoure la bordure périphérique du capot inférieur de dispositif d'extraction de jus ;
Un maillage à filtre (48) qui est placé au centre de la couverture de base du dispositif d'extraction de jus ;
Une unité (46) de commande d'humidité qui est connectée à la sortie du corps de dispositif d'extraction de jus ; et
Un écrou de dispositif d'extraction de jus qui est vissé sur la sortie du corps de dispositif d'extraction de jus.

5. Dispositif selon l'une des revendications 1 à 4 **caractérisé en qu'**il comporte en outre :
Une unité (5) de broyage de viande qui peut être échangé avec certains des composants dans le dispositif d'extraction qui peut remplacer l'écrou principal à vis pour broyer de la viande ;
Une jupe (55B) d'écrou à vis de broyage de viande qui est placé à la queue du boulon (51 B) à vis de broyage de viande ;
Un plateau (53B) écran de broyage de viande qui peut remplacer les plateaux principales écran pour broyer de la viande ;
Un écrou de corps de broyage de viande qui peut remplacer l'écrou de corps pour broyer de la viande ; et
Une lame (50) à pédale qui peut remplacer le plateau d'écran d'extraction de jus pour broyer de la viande.

6. Dispositif selon la revendication 2 ou selon l'unes des revendications 3 à 5 dépendantes de la revendication 2, **caractérisé en qu'**il est prévu une partie en saillie au centre d'une partie plus longue d'un bâton de contrôle (151) du contrôleur de disque à vide (15), le contrôleur étant actionnable entre une position verticale où le centre du contrôleur s'étend horizontalement, et une position horizontale où le centre du contrôleur s'étend verticalement.

7. Dispositif selon la revendication (6), **caractérisé en ce que** le centre du contrôleur de disque à vide (15) est placé dans le trou de maintien du contrôleur de connecteur.

8. Dispositif selon la revendication 2 , ou l'une des revendications 3 à 7 dépendantes de la revendication 2, **caractérisé en ce qu'**une base (120) de support de disque à vide est prévue, présentant la même forme que le disque à vide.

9. Dispositif selon la revendication 8 **caractérisé en ce que** un support à rebord (121) de disque à vide est prévue au centre du support de disque à vide, et un trou de maintien du contrôleur de support de disque à vide dans le centre du rebord de support de disque à vide, ledit trou étant susceptible d'être connecté à un connecteur de support de disque à vide, le centre du contrôleur de disque à vide étant configuré pour être installé à l'intérieur du trou de maintien du contrôleur de connecteur, tandis que le contrôleur est monté à rotation.

10. Dispositif selon l'une des revendications 8 ou 9, **caractérisé en ce que** le disque à vide (10) est flexible, le disque étant susceptible d'être actionné pour être déformé sous l'effet d'une force extérieure.

11. Dispositif selon la revendication 4, ou l'une des revendications 5 à 10, dépendantes de la revendication 4, **caractérisé en ce que** le petit axe (52) d'écrou à vis principal comporte un élément plus grand, qui est prévu dans le trou d'axe d'écrou à vis principal, et un petit élément qui s'étend à l'extérieur de l'écrou à vis principal.

12. Dispositif selon la revendication 11, **caractérisé en ce qu'**une section profilée de l'élément le plus petit du petit axe (52) d'écrou à vis principal, correspond à la forme du plateau (41) d'écran d'extraction de jus, et un profil d'axe de queue d'écrou à vis auxiliaire, de façon que le petit axe d'écrou à vis principal est susceptible d'être actionné pour entraîner le plateau d'écran d'extraction de jus et l'écrou à vis auxiliaire en rotation ensemble.

13. Dispositif selon la revendication 5, ou l'une des revendications 6 à 12 dépendantes de la revendication 5, **caractérisé en ce que** deux petits axes formant un angle entre eux sur le sommet de l'écrou à vis (51 B) de broyage de viande, correspondent à des trous sur la lame (50) à pédale de façon que cette dernière puisse être entraîner en rotation.

14. Dispositif selon la revendication 4, ou l'une des revendications 5 à 13 dépendantes de la revendication 4, **caractérisé en ce que** un filetage à vis est formé autour de l'écrou à vis (51 A) à vis principal, le dispositif étant susceptible d'être actionné pour entraîner le filetage à vis en rotation avec l'écrou à vis principal, pour pousser en conséquence les aliments dans le dispositif vers l'avant, en direction de la sortie.

15. Dispositif selon la revendication 4 ou l'une des revendications 5 à 14 dépendantes de la revendication 4, **caractérisé en ce que** un filetage à vis est prévu autour de l'écrou à vis (42) auxiliaire, le dispositif étant susceptible d'être actionné pour entraîner le filetage à vis en rotation avec l'écrou à vis auxiliaire, pour pousser ainsi les aliments à l'intérieur du corps de dispositif vers la sortie.

16. Dispositif selon la revendication 5, ou l'une des revendications 6 à 15 dépendantes de la revendication 5, **caractérisé en ce que** un filetage à vis est prévu autour de l'écrou à vis (51 B) de broyage de viande, le dispositif étant susceptible d'être actionné pour entraîner le filetage à vis pour tourner ensemble avec l'écrou à vis de broyage de viande, et poussant ainsi les aliments dans le corps de dispositif vers la sortie.

17. Dispositif selon la revendication 5, ou l'une des revendications 6 à 16, dépendant de la revendication 5, **caractérisé en ce que** le plateau (53A) d'écran principal est d'une forme correspondant au plateau d'écran de broyage de viande, des trous prévus dans le plateau d'écran (53B) de broyage de viande étant plus petit que les trous prévus dans le plateau d'écran principal, les trous sur le plateau d'écran de broyage de viande étant en nombre plus grand par unité de surface que les trous sur le plateau d'écran principal.

18. Dispositif selon la revendication 4, ou l'une des revendications 5 à 17 dépendantes de la revendication 4, **caractérisé en ce que** le corps de dispositif (3) d'extraction de jus est prévu avec une ouverture d'entrée d'une première taille, le corps étant configuré de façon que les aliments entrant dans le corps de dispositif d'extraction de jus au travers de l'ouverture d'entrée est compressé au fur et à mesure que le matériau est forcé dans le corps de dispositif d'extraction de jus en éloignement de l'ouverture d'entrée.

19. Dispositif selon la revendication 4, ou l'une des revendications 5 à 18, dépendantes de la revendications 4, **caractérisé en ce que** la sortie des solides est prévue dans ledit corps (3) de dispositif d'extraction de jus.

20. Dispositif selon la revendication 4, ou l'une des revendications 5 à 19, dépendantes de la revendication 4, **caractérisé en ce qu'**une sortie de liquide est prévue dans ledit corps (3) de dispositif d'extraction de jus.

21. Dispositif selon l'une des revendications précédentes, **caractérisé en ce que** la sortie de solide comporte une ouverture sur chaque côté d'une partie de l'unité (46) de contrôle d'humidité faisant face au corps de dispositif.

22. Dispositif selon la revendication 21, **caractérisé en ce que** avec l'unité de contrôle (46) d'humidité installée avec le corps (3) de dispositif d'extraction de jus, un plan d'une ouverture de la sortie de solide est sensiblement parallèle à un plan de l'ouverture de la sortie de liquide.
